# EUROPÄISCHE PATENTANMELDUNG

(11) **EP 2 045 641 A2**
(43) Veröffentlichungstag der Anmeldung: **08.04.2009**
(21) Anmeldenummer: 08163492.5
(22) Anmeldetag: 15.06.2001
(51) Int. Cl.: G02B 21/00, G02B 6/12, G02F 1/35

(54) **Beleuchtungseinrichtung**

(30) Priorität: 17.06.2000 DE 10030013; 29.03.2001 DE 10115589
(62) Teilanmeldung aus: 01114437.5
(71) Anmelder: Leica Microsystems CMS GmbH, 35578 Wetzlar (DE)
(72) Erfinder: Birk, Holger, 74909 Meckesheim (DE); Storz, Rafael, 8330 Pfäffikon (CH)
(74) Vertreter: Schaumburg, Thoenes, Thurn, Landskron, Eckert

(57) **Zusammenfassung**

Die Erfindung betrifft eine Beleuchtungseinrichtung (1) mit einem Laser (3), der einen Lichtstrahl (7) emittiert, der auf ein mikrostrukturiertes optisches Element (13) gerichtet ist, das das Licht des Lasers spektral verbreitert. Der Laser (3) und das mikrostrukturierte optische Element (13) sind zu einem Modul zusammengefasst, wobei das mikrostrukturierte optische Element (13) aus Photonic-Band-Gap-Material besteht und als Lichtleiterfaser ausgebildet ist, und wobei eine optische Diode zwischen dem Laser und der Lichtleitfaser vorgesehen ist, die eine Rückreflexion des Lichtstrahls des Lasers, die von den Enden der Lichtleitfaser herrührt, unterdrückt.

## Beschreibung

Die Erfindung betrifft eine Beleuchtungseinrichtung mit einem Laser, der einen Lichtstrahl emittiert, der auf ein mikrostrukturiertes optisches Element gerichtet ist, das das Licht des Lasers spektral verbreitert.

Aus der Offenlegungsschrift DE 198 53 669 A1 ist eine Ultrakurzpulsquelle mit steuerbarer Mehrfachwellenlängenausgabe offenbart, die insbesondere in einem Multiphotonenmikroskop Anwendung findet. Das System weist einen Ultrakurzimpulslaser zur Erzeugung ultrakurzer optischer Impulse einer festen Wellenlänge und zumindest einen Wellenlängenumwandlungskanal auf.

Die Patentschrift US 6.097.870 offenbart eine Anordnung zur Generierung eines Breitbandspektrum im sichtbaren und infraroten Spektralbereich. Die Anordnung basiert auf einer mikrostrukturierten Faser, in die das Licht eines Pumplasers eingekoppelt wird. Das Pumplichtes wird in der mikrostrukturierten Faser durch nichtlineare Effekte verbreitert. Als mikrostrukturierte Faser findet auch sog. Photonic-Band-Gap-Material oder "photonic crystal fibres", "holey fibers" oder "microstructured fibers" Verwendung. Es sind auch Ausgestaltungen als sog. "Hollow fiber" bekannt.

Eine weitere Anordnung zur Generierung eines Breitbandspektrums ist in der Veröffentlichung von Birks et al.: "Supercontinuum generation in tapered fibers", Opt.Lett. Vol. 25, p.1415 (2000), offenbart. In der Anordnung wird eine herkömmliche Lichtleitfaser mit einem Faserkern, die zumindest entlang eines Teilstücks eine Verjüngung aufweist verwendet. Lichtleitfasern dieser Art sind als sog. "tapered fibers" bekannt.

Aus der PCT-Anmeldung mit der Publikationsnummer WO 00/04613 ist ein optischer Verstärker bekannt, dessen Verstärkung in Abhängigkeit von der Wellenlänge einstellbar ist. Ferner ist in der genannten Publikation eine auf diesem Prinzip beruhende Faserlichtquelle offenbart.

Bogenlampen sind als breitbandige Lichtquellen bekannt und werden in vielen Bereichen verwendet. Exemplarisch sei hier die US-Patentschrift 3,720,822 "XENON PHOTOGRAPHY LIGHT" genannt, die eine Xenon-Bogenlampe zur Beleuchtung in der Photografie offenbart.

Insbesondere in der Mikroskopie sind zur Beleuchtung mikroskopischer Präparate universelle Beleuchtungseinrichtungen mit hoher Leuchtdichte wichtig. In der Scanmikroskopie wird eine Probe mit einem Lichtstrahl abgerastert. Hierzu werden oft Laser als Lichtquelle eingesetzt. Aus der EP 0 495 930: "Konfokales Mikroskopsystem für Mehrfarbenfluoreszenz" ist beispielsweise ein Anordnung mit einem einzelnen mehrere Laserlinien emittierenden Laser bekannt. Derzeit werden hierfür meist Mischgaslaser, insbesondere ArKr-Laser, eingesetzt. Als Probe werden beispielsweise mit Fluoreszenzfarbstoffen präparierte, biologische Gewebe oder Schnitte untersucht. Im Bereich der Materialuntersuchung wird oft das von der Probe reflektierte Beleuchtungslicht detektiert. Auch Festkörperlaser und Farbstofflaser, sowie Faserlaser und Optisch-Parametrische-Oszillatoren (OPO), denen ein Pumplaser vorgeordnet ist, werden häufig verwendet.

Die aus dem Stand der Technik bekannten Beleuchtungseinrichtungen haben mehrere Nachteile. Die bekannten breitbandigen Beleuchtungseinrichtungen weisen meist eine im Vergleich zu laserbasierenden Beleuchtungseinrichtungen geringe Leuchtdichte auf, während diese dem Benutzer nur diskrete Wellenlängenlinien zur Verfügung stellen, deren spektrale Lage und Breite, wenn überhaupt, nur in geringem Maße einstellbar ist. Durch diese Begrenzung des Arbeitsspektrums sind die bekannten Beleuchtungseinrichtungen nicht flexibel einsetzbar.

Durch die Verwendung von mikrostrukturierten Fasern, wie es in der bereits erwähnten US-Patentschrift 6,097,870 beschrieben ist, wird ein breites kontinuierliches Wellenlängenspektrum zugänglich. Anordnungen der offenbarten Art sind jedoch insbesondere auf Grund der Komplexität der einzelnen optischen Komponenten und deren Justierung zueinander umständlich zu handhaben, unflexibel und störungsanfällig.

Der Erfindung liegt die Aufgabe zugrunde, eine Beleuchtungseinrichtung zu schaffen, die die aufgezeigten Nachteile und Probleme vermeidet bzw. löst.

Die objektive Aufgabe wird durch eine Anordnung gelöst, die die Merkmale des kennzeichnenden Teils des Patentanspruchs 1 beinhaltet.

Die Erfindung hat den Vorteil, dass sie universell einsetzbar, leicht zu handhaben und flexibel ist und darüber hinaus Licht aus einem breiten Wellenlängenbereich bietet.

In einer bevorzugten Ausgestaltung weist die Beleuchtungseinrichtung ein Gehäuse mit einer Lichtaustrittsöffnung auf, aus der das spektral verbreiterte Licht austritt. Dies hat den Vorteil, dass insbesondere die optischen Komponenten vor äußeren Einflüssen und insbesondere vor Verschmutzung geschützt sind.

Von besonderem Vorteil ist eine Ausgestaltungsvariante, in der dem mikrostrukturierten optischen Element eine Optik nachgeordnet ist, die das spektral verbreiterte Licht zu einem Strahl formt. Diese Optik befindet sich vorzugsweise innerhalb des Gehäuses unmittelbar vor oder in der Lichtaustrittsöffnung. Hinsichtlich der Strahlensicherheit ist eine, vorzugsweise am Gehäuse angebrachte, Warnlampe vorgesehen, die dem Benutzer die Aktivität der Beleuchtungseinrichtung anzeigt.

Als Laser sind alle gängigen Lasertypen verwendbar. In einer bevorzugten Ausgestaltung ist der Laser ein Kurzpulslaser, beispielsweise ein modenverkoppelter oder modengekoppelter Festkörperlaser, der Lichtpulse einer Dauer von 100 fs bis 10 ps emittiert.

Besonders bevorzugt ist eine Ausführungsform der Beleuchtungseinrichtung, die eine Vorrichtung zur Variierung der Leistung des spektral verbreiterten Lichtes beinhaltet. Ganz besonders vorteilhaft ist es, hierbei die Beleuchtungseinrichtung derart auszugestalten, dass die Leistung des spektral verbreiterten Lichtes bezüglich mindestens einer auswählbaren Wellenlänge oder mindestens eines auswählbaren Wellenlängenbereichs variierbar oder vollständig ausblendbar ist.

Als Vorrichtung zur Variierung der Leistung des spektral verbreiterten Lichtes sind vorzugsweise akustooptische oder elektrooptische Elemente, wie beispielsweise akustooptische, einstellbare Filter (acusto optical tunable filter, AOTF), einsetzbar. Ebenso sind dielektrische Filter oder Farbfilter verwendbar, die vorzugsweise kaskadiert angeordnet sind. Eine besondere Flexibilität wird dadurch erreicht, dass die Filter in Revolvern oder in Schiebefassungen angebracht sind, die ein leichtes Einbringen in den Strahlengang des spektral verbreiterten Lichtes ermöglichen.

In einer anderen Ausgestaltungsform ist vorgesehen, das spektral verbreiterte Licht räumlich spektral aufzuspalten, um mit einer geeigneten variablen Blendenanordnung oder Filteranordnung spektrale Anteile zu unterdrücken oder ganz auszublenden und anschließend die verbliebenen Spektralanteile wieder zu einem Strahl zu vereinigen. Zur räumlich spektralen Aufspaltung ist beispielsweise ein Prisma oder ein Gitter verwendbar.

Zur Variierung der Leistung des spektral verbreiterten Lichtes ist in einer weiteren Ausführungsvariante ein Fabry-Perot-Filter vorgesehen. Auch LCD-Filter sind einsetzbar.

Besonders vorteilhaft ist eine Ausführungsform, die direkt am Gehäuse Bedienelemente zur Einstellung der Lichtleistung und der spektralen Zusammensetzung des spektral verbreiterten Lichtes aufweist. In einer anderen Ausführungsform werden diese Parameter an einem externen Bedienpult oder an einem PC eingestellt und die Einstelldaten in Form von elektrischen Signalen an die Beleuchtungseinrichtung bzw. an die Vorrichtung zur Variierung der Leistung des spektral verbreiterten Lichtes übertragen. Besonders anschaulich ist die Einstellung über Schieber (Slider), die auf einem Display angezeigt sind und beispielsweise mit einer Computermaus bedient werden.

Erfindungsgemäß ist erkannt worden, dass die Divergenz und der Durchmesser des Lichtstrahles, der von dem Laser emittiert und auf das mikrostrukturierte optische Element gerichtet ist, erheblichen Einfluss auf die spektrale Verteilung innerhalb des spektral verbreiterten Lichtes hat. In einer besonders bevorzugten und flexiblen Ausgestaltung beinhaltet die Beleuchtungseinrichtung eine Fokussieroptik, die den Lichtstrahl des Lasers auf das mikrostrukturierte optische Element fokussiert. Besonders vorteilhaft ist eine Ausführung der Fokussieroptik als Variooptik, beispielsweise als Zoomoptik.

In der Beleuchtungseinrichtung ist vorzugsweise eine Vorrichtung vorgesehen, die eine Analyse des in der Wellenlänge verbreiterten Lichtes insbesondere hinsichtlich der spektralen Zusammensetzung und der Lichtleistung ermöglicht. Die Analysevorrichtung ist derart angeordnet, dass ein Teil des spektral verbreiterten Lichtes beispielsweise mit Hilfe eines Strahlteilers abgespalten und der Analysevorrichtung zugeführt wird. Die Analysevorrichtung ist vorzugsweise ein Spektrometer. Sie enthält beispielsweise ein Prisma oder ein Gitter zur räumlich spektralen Aufspaltung und ein CCD-Element oder einen Mehrkanalphotomultiplier als Detektor. In einer Anderen Variante beinhaltet die Analsysevorrichtung einen Multibanddetektor. Auch Halbleiterspektrometer sind verwendbar.

Zur Feststellung der Leistung des spektral verbreiterten Lichtes sind die Detektoren derart ausgestaltet, dass ein zur Lichtleistung proportionales elektrisches Signal erzeugt wird, das von einer Elektronik oder einem Computer auswertbar ist.

Ganz besonders vorteilhaft ist die Ausführungsform, die eine Anzeige für die Leistung des spektral verbreiterten Lichtes und/oder für die spektrale Zusammensetzung des spektral verbreiterten Lichtes beinhaltet. Die Anzeige ist vorzugsweise direkt an dem Gehäuse oder dem Bedienpult angebracht. In einer anderen Ausführungsform dient der Monitor eines PCs zur Anzeige der Leistung bzw. der spektralen Zusammensetzung.

Das mikrostrukturierte optische Element ist in einer bevorzugten Ausgestaltung des Scanmikroskops aus einer Vielzahl von mikrooptischen Strukturelementen aufgebaut, die zumindest zwei unterschiedliche optische Dichten aufweisen. Ganz besonders bevorzugt ist eine Ausgestaltung, bei der das optische Element einen ersten Bereich und einen zweiten Bereich beinhaltet, wobei der erste Bereich eine homogene Struktur aufweist und in dem zweiten Bereich eine mikroskopische Struktur aus mikrooptischen Strukturelementen gebildet ist. Von Vorteil ist es außerdem, wenn der erste Bereich den zweiten Bereich umschließt. Die mikrooptischen Strukturelemente sind vorzugsweise Kanülen, Stege, Waben, Röhren oder Hohlräume.

Das mikrostrukturierte optische Element besteht in einer anderen Ausgestaltung aus nebeneinander angeordnetem Glas- oder Kunststoffmaterial und Hohlräumen. Besonders zu bevorzugen ist die Ausführungsvariante, bei der das mikrostrukturierte optische Element aus Photonic-Band-Gap-Material besteht und als Lichtleitfaser ausgestaltet ist, wobei vorzugsweise eine optische Diode zwischen dem Laser und der Lichtleitfaser vorgesehen ist, die eine Rückreflexion des Lichtstrahles des Lasers, die von den Enden der Lichtleitfaser herrührt, unterdrückt.

Eine ganz besonders bevorzugte und einfach zu realisierende Ausführungsvariante beinhaltet als mikrostrukturiertes optisches Element eine herkömmliche Lichtleitfaser mit einem Faserkemdurchmesser von ca. 9 µm, die zumindest entlang eines Teilstücks eine Verjüngung aufweist. Lichtleitfasern dieser Art sind als sog. "tapered fibers" bekannt. Vorzugsweise ist die Lichtleitfaser insgesamt 1 m lang und weist eine Verjüngung auf einer Länge von 30 mm bis 90 mm auf. Der Durchmesser der Lichtleitfaser beträgt in einer bevorzugten Ausgestaltung im Bereich der Verjüngung ca. 2 µm. Der Faserkemdurchmesser liegt entsprechend im Nanometerbereich.

Die Beleuchtungseinrichtung ist ganz besonders für die Beleuchtung einer mikroskopischen Probe, insbesondere in einem Scanmikroskop oder konfokalen Scanmikroskop, einsetzbar.

In der Zeichnung ist der Erfindungsgegenstand schematisch dargestellt und wird anhand der Figuren nachfolgend beschrieben. Dabei zeigen:
- Fig. 1: eine erfindungsgemäße Beleuchtungseinrichtung ,
- Fig. 2: eine weitere erfindungsgemäße Beleuchtungseinrichtung,
- Fig.3: eine erfindungsgemäße Beleuchtungseinrichtung mit einem Spektrometer und einer Anzeige,
- Fig.4: eine erfindungsgemäße Beleuchtungseinrichtung mit einem Leistungsmesser und einer Anzeige,
- Fig. 5: eine erfindungsgemäße Beleuchtungseinrichtung mit einer Vorrichtung zur Variierung der Leistung,
- Fig.6: eine Ausführung des mikrostrukturierten optischen Elements,
- Fig. 7: schematisch ein konfokales Scanmikroskop und
- Fig. 8: eine weitere Ausführung des mikrostrukturierten optischen Elements.

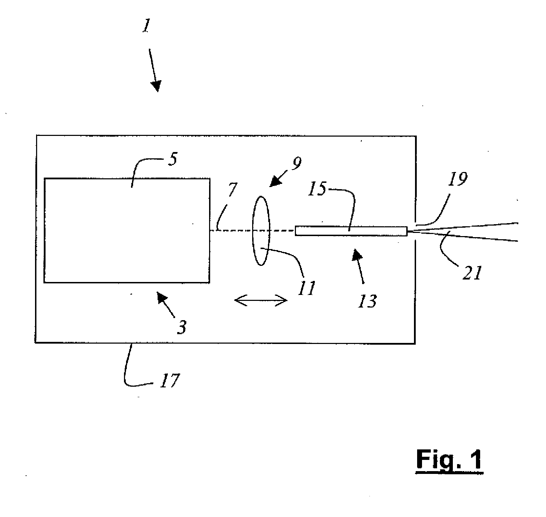

Fig. 1 zeigt eine Beleuchtungseinrichtung 1, die einen Laser 3 beinhaltet, der als diodenlasergepumpter, modengekoppelter Ti:Saphir-Laser 5 ausgeführt ist und der einen gepulsten Lichtstrahl 7, der gestrichelt gezeichnet ist, emittiert. Die Dauer der Lichtpulse beträgt ca. 100 fs bei einer Repetitionsrate von ca. 80 MHz. Der Lichtstrahl 7 wird mit der Fokussieroptik 9, die als Zoomoptik 11 ausgestaltet und entlang der Fortpflanzungsrichtung des Lichtstrahles verschiebbar angeordnet ist, auf ein mikrostrukturiertes optisches Element 13, das aus einem Kristall 15 aus Photonic-band-Gap-Material besteht, fokussiert. In dem mikrostrukturierten optischen Element wird das Licht des Lasers spektral verbreitert. Alle Komponenten befinden sich in einen Gehäuse 17 mit einer Lichtaustrittsöffnung 19, durch die das spektral verbreiterte Licht 21, als divergent verlaufender Strahl, das Gehäuse verlässt. Das Spektrum des spektral verbreiterten Lichts 21 reicht von ca. 300 nm bis 1600 nm, wobei die Lichtleistung über das gesamte Spektrum weitgehend konstant ist.

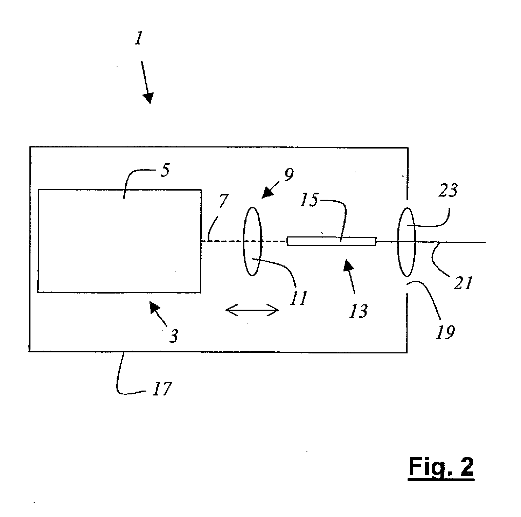

Fig. 2 zeigt ein Ausführungsbeispiel analog zu der in Fig. 1 dargestellten Ausführungsform. In der Lichtaustrittsöffnung 19 befindet sich eine Optik 23, die das spektral verbreiterte Licht 21 derart zu einem spektral verbreiterten Lichtstrahl 25 formt, dass dieser kollimiert verläuft. Die Optik 23 ist als Variooptik ausgeführt.

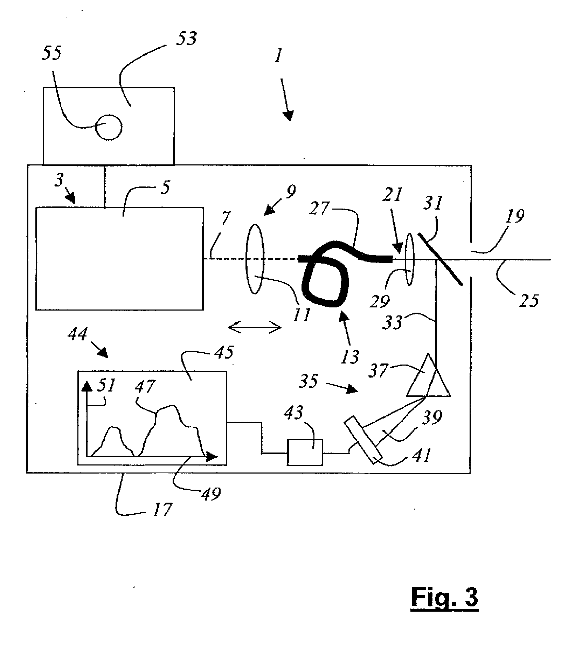

Fig. 3 zeigt ein Ausführungsbeispiel analog zu der in Fig. 1 dargestellten Ausführungsform. Das mikrostrukturierte optische Element 13 besteht aus Photonic-band-Gap-Material und ist als Lichtleitfaser 27 ausgebildet Das aus der Lichtleitfaser 27 austretende, spektral verbreiterte Licht 21, wird mit Hilfe der Optik 29 zu einem kollimierten, spektral verbreiterten Lichtstrahl 25 geformt. Mit dem Strahlteiler 31 wird ein Teillichtstrahl 33 des spektral verbreiterten Lichtstrahls 25 abgespalten und auf eine Analysevorrichtung 35 gelenkt. Diese beinhaltet ein Prisma 37, das den Teillichtstrahl 33 räumlich spektral zu einem in der Auffächerungsebene divergent verlaufenden Lichtbündel 39 auffächert und auf eine Photodiodenzeile 41 zur Detektion des Lichtes richtet. Die Photodiodenzeile 41 erzeugt zur Leistung des Lichtes des jeweiligen Spektralbereichs proportionale elektrische Signale, die einer Verarbeitungseinheit 43 zugeführt werden. Dort werden die Signale aufbereitet und an eine Anzeige 44 weitergeleitet. Diese besteht aus einem am Gehäuse angebrachten LCD-Display 45 auf dem in Form eines Graphen 47 innerhalb eines Koordinatensystems mit zwei Achsen 49, 51 die Zusammensetzung des spektral verbreiterten Lichtes 21 angezeigt wird. An der Achse 49 ist die Wellenlänge aufgetragen und an der Achse 51 die Leistung des Lichtes. Die gezeigte Beleuchtungseinrichtung beinhaltet ein Bedienpult 53 mit einem Regelknopf 55, der zur Einstellung der Ausgangsleistung des Ti:Saphir-Laser 5 dient. Durch Einstellung der Leistung des Lichtstrahles 7 ist es möglich die Leistung des spektral verbreiterten Lichtes 21 zu variieren.

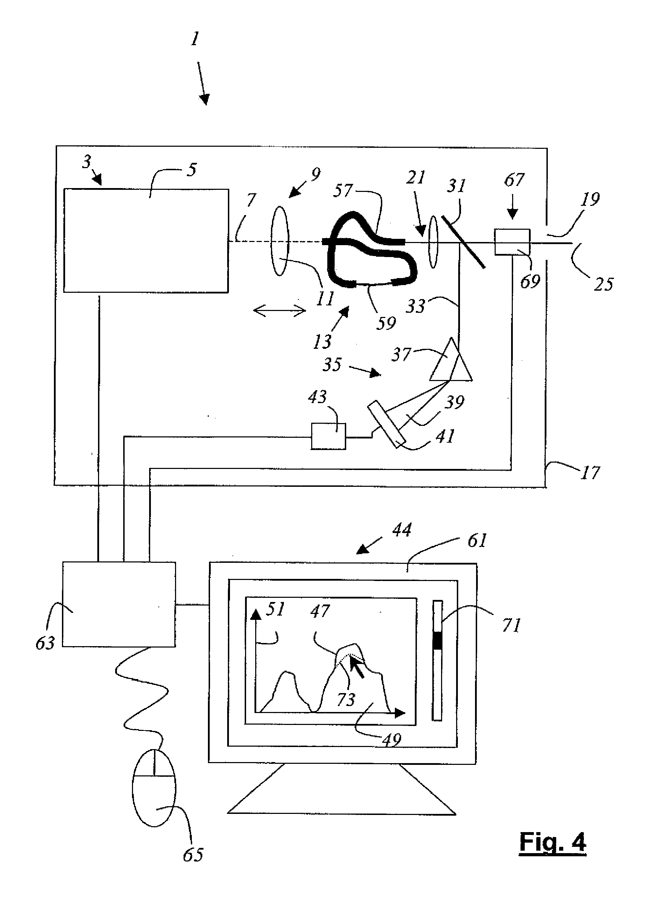

Fig. 4 zeigt eine Beleuchtungseinrichtung 1, die im Grundaufbau der in Fig. 3 dargestellten Beleuchtungseinrichtung entspricht. Das mikrostrukturierte optische Element 13 besteht aus eine, eine Verjüngung 59 aufweisenden Lichtleitfaser 57. Als Bedienpult ist ein Computer 63 eingesetzt. Als Anzeige 44 für die spektrale Zusammensetzung dient der Monitor 61 des Computers 63, dem die aufbereiteten elektrischen Signale der Verarbeitungseinheit zugeführt werden. Die Darstellung erfolgt analog zur der in Fig. 3 gezeigten Koordinatendarstellung. Der Computer 63 steuert entsprechend der Benutzervorgabe eine Vorrichtung zur Variierung der Leistung 67 des spektral verbreiterten Lichtes 21. Diese ist als AOTF 69 (acousto optical tunable filter) ausgeführt. Außerdem ist eine Steuerung der Ausgangsleistung des Lasers 3 übr den Computer vorgesehen. Der Benutzer nimmt Einstellungen mit Hilfe der Computermaus 65 vor. Auf dem Monitor 61 ist ein Slider 71 dargestellt, der zur Einstellung der Gesamtleistung des spektral veränderten Lichtes 21 dient. Durch anklicken des Graphen 47 bei gleichzeitigem Verschieben der Computermaus 65 wird ein gestrichelter Graph 73 erzeugt, der entsprechend der Bewegung der Computermaus 65 verformbar ist. Im Augenblick eines erneuten Klickens mit der Computermaus 65 wird über den Computer 63 die Vorrichtung zur Variierung der Leistung 67 derart angesteuert, daß sich die mit dem gestrichelten Graphen 73 vorgewählte spektrale Zusammensetzung ergibt.

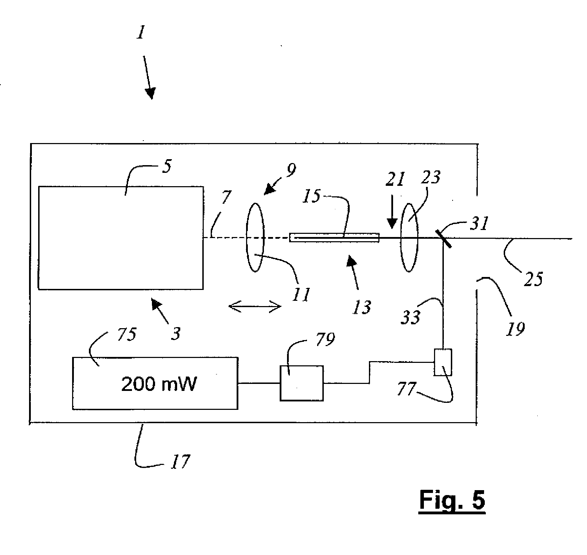

Fig. 5 zeigt eine Beleuchtungseinrichtung wie in Fig. 1, die zusätzlich eine Anzeige 75 für die Leistung des spektral verbreiterten Lichtes 21 beinhaltet, die als reine Zahlendarstellungsanzeige ausgeführt ist. Mit dem Strahlteiler 31 wird ein Teilstrahl 33 von dem spektral verbreiterten Licht 21 abgespalten und auf einen Photomultiplier 77 gelenkt, der ein zur Leistung des auftreffenden Teilstrahles 33 proportionales elektrisches Signal erzeugt. Dieses wird in der Verarbeitungseinheit 79 aufbereitet und an die Anzeige 75 übermittelt.

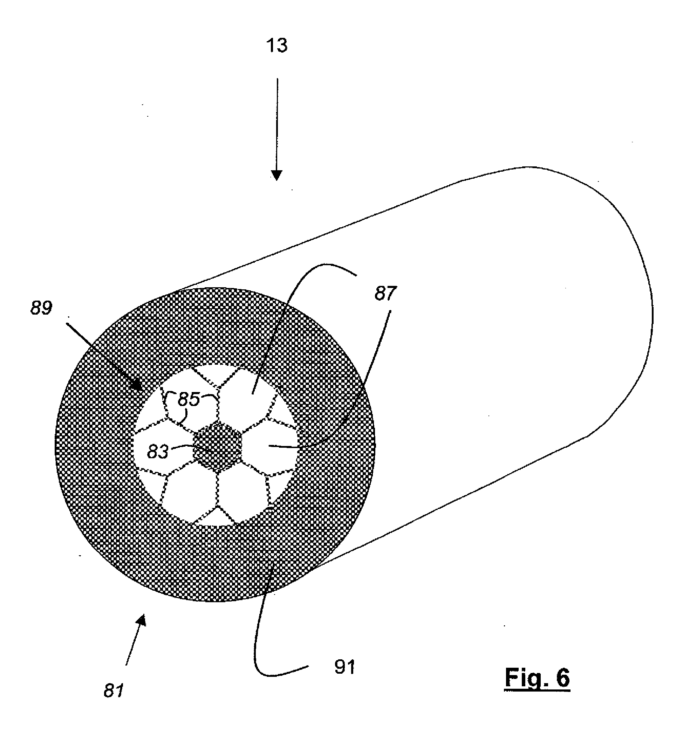

Fig. 6 zeigt eine Ausführung des mikrostrukturierten optischen Elements 13. Dieses besteht aus Photonic-Band-Gap-Material, die eine besondere wabenförmige Mikrostruktur 81 aufweist. Die gezeigte Wabenstruktur ist für die Generierung von breitbandigem Licht besonders geeignet. Der Durchmesser der Glasinnenkanüle 83 beträgt ca. 1,9 µm. Die innere Kanüle 83 ist von Glassteegen 85 umgeben. Die Glasstege 85 formen wabenförmige Hohlräume 87. Diese mikrooptischen Strukturelemente bilden gemeinsam einen zweiten Bereich 89, der von einem ersten Bereich 91, der Glasmantel ausgeführt ist, umgeben ist.

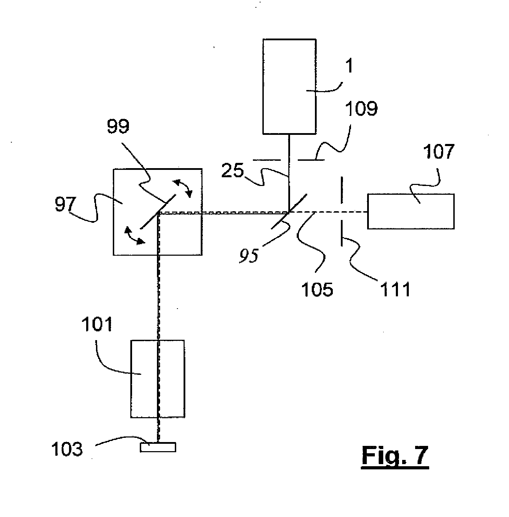

Fig. 7 zeigt schematisch ein konfokales Scanmikroskop 93. Der von der Beleuchtungseinrichtung 1 kommende Lichtstrahl 25 wird von einem Strahlteiler 95 zum Scanmodul 97 reflektiert, das einen kardanisch aufgehängten Scanspiegel 99 beinhaltet, der den Lichtstrahl 25 durch die Mikroskopoptik 101 hindurch über bzw. durch das Präparat 103 führt. Der Lichtstrahl 25 wird bei nicht transparenten Präparaten 103 über die Objektoberfläche geführt. Bei biologischen Präparaten 103 oder transparenten Präparaten 103 kann der Lichtstrahl 25 auch durch das Präparat 103 geführt werden. Dies bedeutet, dass aus verschiedenen Fokusebenen des Präparats 103 nacheinander durch den Lichtstrahl 25 abgetastet werden. Die nachträgliche Zusammensetzung ergibt dann ein dreidimensionales Bild des Präparates. Der von der Beleuchtungseinrichtung 1 kommende Lichtstrahl 25 ist in der Abbildung als durchgezogene Linie dargestellt. Das vom Präparat 103 ausgehende Licht 105 gelangt durch die Mikroskopoptik 101 und über das Scanmodul 97 zum Strahlteiler 95, passiert diesen und trifft auf Detektor 107, der als Photomultiplier ausgeführt ist. Das vom Präparat 103 ausgehende Licht 105 ist als gestrichelte Linie dargestellt. Im Detektor 107 werden elektrische, zur Leistung des vom Präparat 103 ausgehenden Lichtes 105 proportionale Detektionssignale erzeugt und weiterverarbeitet. Das bei einem konfokalen Scanmikroskop üblicherweise vorgesehene Beleuchtungspinhole 109 und das Detektionspinhole 111 sind der Vollständigkeit halber schematisch eingezeichnet. Weggelassen sind wegen der besseren Anschaulichkeit hingegen einige optische Elemente zur Führung und Formung der Lichtstrahlen. Diese sind einem auf diesem Gebiet tätigen Fachmann hinlänglich bekannt.

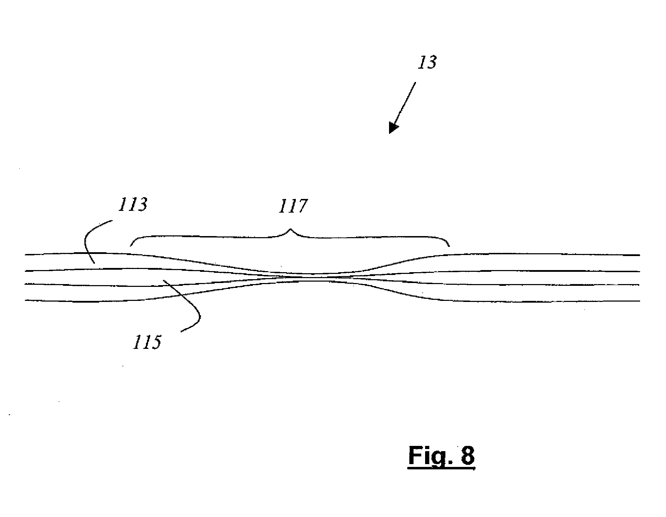

Fig. 8 zeigt schematisch eine Ausführung des mikrostrukturierten optischen Elements 13. In dieser Ausführung besteht das mikrostrukturierte optische Element 13 aus einer herkömmlichen Lichtleitfaser 113 mit einem Außendurchmesser von 125 µm und einem Faserkem 115, der einen Durchmesser von 6 µm aufweist. Im Bereich einer 300 mm langen Verjüngung 117 ist der Aussendruchmesser der Lichtleitfaser 113 auf 1,8 µm reduziert. In diesem Bereich beträgt der Durchmesser des Faserkerns 115 nur noch Bruchteile von Mikrometern.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Beleuchtungseinrichtung
- 3: Laser
- 5: Ti:Saphir-Laser
- 7: Lichtstrahl
- 9: Fokussieroptik
- 11: Zoomoptik
- 13: mikrostrukturiertes optisches Element
- 15: Kristall
- 17: Gehäuse
- 19: Lichtaustrittsöffnung
- 21: spektral verbreitertes Licht
- 23: Optik
- 25: spektral verbreiterter Lichtstrahl
- 27: Lichtleitfaser
- 29: Optik
- 31: Strahlteiler
- 33: Teilichtstrahl
- 35: Analysevorrichtung
- 37: Prisma
- 39: Lichtbündel
- 41: Photodiodenzeile
- 43: Verarbeitungseinheit
- 44: Anzeige
- 45: LCD-Display
- 47: Graph
- 49: Achse
- 51: Achse
- 53: Bedienpult
- 55: Regelknopf
- 57: Lichtleitfaser
- 59: Verjüngung
- 61: Monitor
- 63: Computer
- 65: Computermaus
- 67: Vorrichtung zur Variierung der Leistung
- 69: AOTF
- 71: Slider
- 73: Graph
- 75: Anzeige
- 77: Photomultiplier
- 79: Verarbeitungseinheit
- 81: Mikrostruktur
- 83: Glasinnenkanüle
- 85: Glassteege
- 87: Hohlräume
- 89: zweiter Bereich
- 91: erster Bereich
- 93: konfokales Scanmikroskop
- 95: Strahlteiler
- 97: Scanmodul
- 99: Scanspiegel
- 101: Mikroskopoptik
- 103: Präparat
- 105: vom Präparat ausgehendes Licht
- 107: Detektor
- 109: Beleuchtungspinhole
- 111: Detektionspinhole
- 113: Lichtleitfaser
- 115: Faserkern
- 117: Verjüngung

## Patentansprüche

1. Beleuchtungseinrichtung (1) mit einem Laser (3), der einen Lichtstrahl (7) emittiert, der auf ein mikrostrukturiertes optisches Element (13) gerichtet ist, das das Licht des Lasers spektral verbreitert,
**dadurch gekennzeichnet, dass** der Laser (3) und das mikrostrukturierte optische Element (13) zu einem Modul zusammengefasst sind,
dass das mikrostrukturierte optische Element (13) aus Photonic-Band-Gap-Material besteht und als Lichtleiterfaser ausgebildet ist,
und dass eine optische Diode zwischen dem Laser und der Lichtleitfaser vorgesehen ist, die eine Rückreflexion des Lichtstrahls des Lasers, die von den Enden der Lichtleitfaser herrührt, unterdrückt.

2. Beleuchtungseinrichtung (1) mit einem Laser (3), der einen Lichtstrahl (7) emittiert, der auf ein mikrostrukturiertes optisches Element (13) gerichtet ist, das das Licht des Lasers spektral verbreitert,
**dadurch gekennzeichnet, dass** der Laser (3) und das mikrostrukturierte optische Element (13) zu einem Modul zusammengefasst sind,
dass ein Strahlteiler (31) vorgesehen ist, der einen Teilstrahl (33) des spektral verbreiterten Lichts (21) auf eine Analysevorrichtung (35) lenkt.

3. Beleuchtungseinrichtung (1) mit einem Laser (3), der einen Lichtstrahl (7) emittiert, der auf ein mikrostrukturiertes optisches Element (13) gerichtet ist, das das Licht des Lasers spektral verbreitert,
**dadurch gekennzeichnet, dass** der Laser (3) und das mikrostrukturierte optische Element (13) zu einem Modul zusammengefasst sind,
und dass Mittel vorgesehen sind, die das spektral verbreiterte Licht räumlich spektral aufspalten, um mit einer geeigneten variablen Blendenanordnung oder Filteranordnung spektrale Anteile zu unterdrücken oder ganz auszublenden und anschließend die verbliebenen Spektralanteile wieder zu einem Strahl zu vereinigen.

4. Beleuchtungseinrichtung (1) nach einem der vorhergehenden Ansprüche, **dadurch gekennzeichnet, dass** die Beleuchtungseinrichtung (1) ein Gehäuse (17) mit einer Lichtaustrittsöffnung (19) aufweist, aus der das spektral verbreiterte Licht (21) austritt.

5. Beleuchtungseinrichtung (1) nach einem der vorhergehenden Ansprüche, **dadurch gekennzeichnet, dass** dem mikrostrukturierten optischen Element (13) eine Optik (23) nachgeordnet ist, die das spektral verbreiterte Licht zu einem Strahl formt.

6. Beleuchtungseinrichtung (1) nach einem der vorhergehenden Ansprüche, **dadurch gekennzeichnet, dass** die Beleuchtungseinrichtung (1) eine Vorrichtung zur Variierung der Leistung (67) des spektral verbreiterten Lichtes (21) beinhaltet.

7. Beleuchtungseinrichtung (1) nach einem der vorhergehenden Ansprüche, **dadurch gekennzeichnet, dass** die Beleuchtungseinrichtung (1) eine Vorrichtung zur Variierung der Leistung (67) des spektral verbreiterten Lichtes mindestens einer auswählbaren Wellenlänge oder mindestens eines auswählbaren Wellenlängenbereichs beinhaltet.

8. Beleuchtungseinrichtung (1) nach Anspruch 7, **dadurch gekennzeichnet, dass** das spektral verbreiterte Licht (21) innerhalb auswählbarer Wellenlängen oder auswählbarer Wellenlängenbereiche vollständig ausblendbar ist.

9. Beleuchtungseinrichtung (1) nach einem der vorhergehenden Ansprüche 1, 3, 4 bis 8, **dadurch gekennzeichnet, dass** ein Strahlteiler (31) vorgesehen ist, der einen Teilstrahl (33) des spektral verbreiterten Lichtes (21) auf eine Analysevorrichtung (35) richtet.

10. Beleuchtungseinrichtung (1) nach Anspruch 2 oder 9, **dadurch gekennzeichnet, dass** die Analysevorrichtung (35) ein Spektrometer oder ein Leistungsmesser ist.

11. Beleuchtungseinrichtung (1) nach einem der Ansprüche 1 bis 10, **dadurch gekennzeichnet, dass** eine Anzeige (44) für die Leistung und/oder für die spektrale Zusammensetzung des spektral verbreiterten Lichtes (21) vorgesehen ist.

12. Beleuchtungseinrichtung (1) nach einem der vorhergehenden Ansprüche, **dadurch gekennzeichnet, dass** das mikrostrukturierte optische Element (13) aus einer Vielzahl von mikrooptischen Strukturelementen aufgebaut ist, die zumindest zwei unterschiedliche optische Dichten aufweisen.

13. Beleuchtungseinrichtung (1) nach Anspruch 12, **dadurch gekennzeichnet, dass** das mikrostrukturierte optische Element (13) einen ersten Bereich (91) und einen zweiten Bereich (89) beinhaltet, wobei der erste Bereich (91) eine homogene Struktur aufweist und in dem zweiten Bereich (89) eine Mikrostruktur (81) aus mikrooptischen Strukturelementen gebildet ist.

14. Beleuchtungseinrichtung (1) nach einem der Ansprüche 12 oder 13, **dadurch gekennzeichnet, dass** das mikrostrukturierte optische Element (13) aus nebeneinander angeordnetem Glas- oder Kunststoffmaterial und Hohlräumen (87) besteht.

15. Beleuchtungseinrichtung (1) nach Anspruch 2, 3 bis 14, **dadurch gekennzeichnet, dass** das mikrostrukturierte optische Element aus Photonic-Band-Gap-Material besteht.

16. Beleuchtungseinrichtung (1) nach Anspruch 2, 3 bis 15, **dadurch gekennzeichnet, dass** das mikrostrukturierte optische Element als Lichtleitfaser (27, 57) ausgestaltet ist.

17. Beleuchtungseinrichtung (1) nach Anspruch 16, **dadurch gekennzeichnet, dass** die Lichtleitfaser (27, 57) eine Verjüngung (59) aufweist.

18. Beleuchtungseinrichtung (1) nach einem der Ansprüche 1 bis 17, **dadurch gekennzeichnet, dass** die Beleuchtungseinrichtung (1) in einem Mikroskop oder in einem konfokalen Scanmikroskop (93) zur Beleuchtung eines Präparats (103) verwendbar ist.
